# FASCICULE DE BREVET EUROPEEN

(11) **EP 2 810 871 B1**
(45) Date de publication et mention de la délivrance du brevet: **11.11.2020**
(21) Numéro de dépôt: 14001757.5
(22) Date de dépôt: 19.05.2014
(51) Int. Cl.: B64C 13/04, G05G 9/047

(54) **Manette de commande de vol d'un giravion montée basculante sur un support par encastrement d'une tige flexible**
Flugsteuerknüppel eines Drehflügelflugzeugs, der kippbar auf einer Halterung durch den Einbau einer flexiblen Stange montiert ist
Flight control handle for a rotorcraft tiltably mounted on a mounting by recessing a flexible rod

(30) Priorité: 03.06.2013 FR 1301250
(43) Date de publication de la demande: 10.12.2014
(73) Titulaire: Airbus Helicopters, 13725 Marignane Cedex (FR)
(72) Inventeur: Gemmati, Bernard, F-84360 Lauris (FR); Lebernicheux, Brice, F-84300 Cavaillon (FR); Brunel, Jean-Evrard, Montreal, H9C 2W8 (CA)
(74) Mandataire: GPI & Associés

(56) Documents cités:
- WO-A2-93/20535
- FR-A1- 2 962 973
- US-A- 3 331 971
- US-A- 4 477 043

## Description

La présente invention est du domaine des giravions et relève plus spécifiquement des organes de commande de vol entraînés par l'homme pour provoquer une variation cyclique du pas des pales d'un rotor principal à axe sensiblement vertical d'un giravion, afin de modifier l'attitude en vol du giravion en tangage et en roulis.

La présente invention relève de tels organes de commande de vol typiquement agencés en manettes (ou joysticks en langue anglaise) articulées en basculement multidirectionnel sur un support tel qu'agencé en boîtier. La présente invention s'inscrit dans le cadre de telles manettes organisées pour émettre des commandes de vol électriques (CDVE ou FBW d'après l'acronyme anglais Fly-by-Wire) sous l'effet de leur entraînement en basculement par l'homme.

Les giravions sont des aéronefs à voilure(s) tournante(s) dont au moins la sustentation est procurée par au moins un rotor principal à axe sensiblement vertical. Dans le cadre spécifique d'un hélicoptère, le rotor principal procure non seulement la sustentation du giravion mais aussi sa propulsion suivant de quelconques directions de progression. L'attitude en vol de l'hélicoptère peut aussi être modifiée par un pilote du giravion opérant une variation cyclique et/ou collective du pas des pales composant la voilure tournante du rotor principal.

Les giravions sont aussi équipés d'un dispositif anticouple procurant leur guidage en lacet, tel qu'au moins un rotor annexe à axe sensiblement horizontal. Un tel rotor annexe est par exemple un rotor arrière ou peut être formé d'au moins une hélice propulsive dans le cadre d'un hélicoptère à vitesse élevée de propulsion. Une stabilisation de l'attitude en lacet du giravion peut être commandée par un pilote du giravion par variation du pas collectif des pales d'au moins un rotor annexe équipant le giravion.

Un pilote humain du giravion dispose de divers organes de commande de vol pouvant être entraînés par l'homme pour faire varier le pas des pales du ou des rotors équipant le giravion.

Classiquement pour un rotor annexe, une variation collective du pas des pales est commandée par l'homme au moyen d'un palonnier.

Pour un rotor principal, une variation collective du pas des pales est classiquement commandée par l'homme au moyen d'un levier articulé suivant les deux sens d'une même direction de basculement. Une variation cyclique du pas des pales du rotor principal est commandée par l'homme au moyen d'une manette articulée conformément à deux sens de chacune de deux directions de basculement orthogonales entre elles permettant de modifier l'attitude du giravion respectivement en tangage et en roulis.

Il n'est cependant pas à exclure que la variation collective du pas des pales du rotor principal ou du rotor annexe peut être commandée par l'homme au moyen d'une manette articulée en basculement, notamment dans le cadre de commandes de vol électriques.

Les organes de commande de vol sont reliés aux pales d'un rotor qui leur est affecté par l'intermédiaire d'au moins une chaîne cinématique. Un entraînement par le pilote humain d'un organe de commande de vol provoque un pivotement des pales autour d'un axe de pas par l'intermédiaire d'au moins une dite chaîne cinématique.

Les chaînes cinématiques sont communément classifiées en chaîne cinématique de transmission de commandes de vol mécaniques et en chaîne cinématique de transmission de commandes de vol électriques.

Dans le cas d'une chaîne cinématique de transmission de commandes de vol mécaniques, l'entraînement de l'organe de commande de vol par le pilote provoque une manœuvre des pales en variation de pas par l'intermédiaire d'une chaîne cinématique mécanique de transmission de mouvements depuis l'organe de commande de vol vers les pales à manœuvrer.

Dans le cas d'une chaîne cinématique de transmission de commandes de vol électriques, l'entraînement de l'organe de commande de vol par le pilote est générateur de signaux électriques exploités par des moyens de calcul pour provoquer une manœuvre des pales en variation de pas. Classiquement, des capteurs de position détectent une variation de position de l'organe de commande de vol et génèrent les signaux électriques en fonction de la variation de position de l'organe de commande de vol. Les signaux électriques sont transmis aux moyens de calcul qui les convertissent en ordres de commande de la mise en oeuvre d'au moins un actionneur provoquant une manœuvre des pales en variation de pas. De tels actionneurs sont communément désignés par vérin de « trim » et vérin « série ».

Par exemple le document US3331971 (WALDEMAR MOLLER) décrit une manette de commandes de vol électriques ancrée à son extrémité distale à un support. Les mouvements en flexion de la manette provoqués par le pilote sont détectés par des moyens magnétiques fournissant des signaux électriques à des moyens de calcul générateurs des ordres de commandes provoquant la mise en oeuvre d'actionneurs.

Les avantages procurés par l'exploitation de commandes de vol électriques sont nombreux.

Par exemple, l'agencement des organes de commande de vol générant des commandes de vol électriques peut être compact pour limiter leur encombrement et pour faciliter leur implantation à bord de l'aéronef. Notamment pour les manettes générant des commandes de vol électriques, une limitation de leur encombrement favorise leur implantation aisée sur l'accoudoir d'un siège d'installation du pilote à bord du giravion.

La structure mécanique procurant la mobilité d'un organe de commande de vol générant des commandes de vol électriques peut être simplifiée et être allégée, les efforts auxquels est soumis un organe de commande générant des commandes de vol électriques étant essentiellement limités à son entraînement par l'homme.

Par exemple encore, l'exploitation de commandes de vol électriques permet la mise en œuvre de lois de pilotage complexes, telles que des lois de pilotage par objectif, et permet de regrouper sur un même organe de commande de vol une pluralité importante de fonctionnalités à commande électrique.

En outre, l'exploitation de commandes de vol électriques procure un confort pour le pilote en raison de la rupture dans la chaîne cinématique entre les efforts fournis par le pilote pour générer les signaux électriques par entraînement de l'organe de commande de vol et les efforts motorisés développés par le ou les actionneurs pour manœuvrer les pales en variation de pas.

Cependant, un avantage des commandes de vol mécaniques réside dans la possibilité d'exploiter la chaîne cinématique pour transmettre au pilote humain, par l'intermédiaire de l'organe de commande de vol, une sensation d'efforts représentative des efforts développés pour manœuvrer les pales en variation de pas.

Il se pose donc le problème de procurer au pilote une telle sensation d'efforts dans le cadre d'une exploitation de commandes de vol électriques. A cet effet, les organes de commande de vol générant des commandes de vol électriques sont classiquement en prise sur des organes élastiquement déformables générateurs d'une résistance élastique à l'encontre de l'entraînement de l'organe de commande de vol par le pilote.

Il est aussi connu d'utiliser des moteurs électriques pour générer ladite sensation d'efforts. De tels moteurs électriques génèrent une résistance à l'entraînement par le pilote de l'organe de commande de vol générant des commandes de vol électriques en fonction des mouvements que le pilote opère sur celui-ci.

Dans le cadre des manettes exploitées pour commander une variation d'attitude du giravion, telle que par exemple en tangage et en roulis voire potentiellement en lacet ou en verticalité, une telle manette est globalement formée d'une poignée ménagée à l'extrémité proximale d'une tige dont l'extrémité opposée distale est articulée en rotule sur un boîtier. L'articulation en rotule de la tige sur le boîtier procure une mobilité en basculement multidirectionnel de la manette autour du centre de la rotule conformément aux deux sens des deux dites directions de basculement orthogonales entre elles.

Par exemple dans le cas d'une manette exploitée pour commander une variation d'attitude en tangage et en roulis, un basculement d'avant en arrière de la manette procure classiquement un guidage du giravion en tangage, tandis qu'un basculement de droite à gauche de la manette procure un guidage du giravion en roulis. Les notions avant, arrière, droite et gauche sont à considérer par rapport à la station du pilote manœuvrant d'une main l'organe de commande de vol.

L'articulation en rotule de la tige sur le boîtier d'une manette de commande mobile en basculement multidirectionnel, peut être réalisée selon diverses configurations plus ou moins complexes.

Par exemple selon le document DE19806611 (DEUTSCH ZENTR LUFT & RAUMFAHRT) l'articulation en rotule est réalisée par l'intermédiaire d'une sphère ménagée à l'extrémité distale de la tige et montée mobile dans une cavité d'un boîtier. Par exemple encore selon le document FR2643331 (AEROSPATIALE), l'articulation en rotule est réalisée par l'intermédiaire d'au moins un mécanisme du type « Cardan ». Par exemple encore selon les documents FR2643502 (AEROSPATIALE) et GB2377005 (CATERPILLAR INC), l'articulation en rotule est réalisée par un montage de la tige en liberté monodirectionnelle sur des corps montés basculants sur le support autour d'axes de pivot respectifs concourants entre eux.

En ce qui concerne les dispositifs à sensation d'efforts équipant les manettes de commande de vol, on pourra par exemple se reporter aux documents FR2643331 et FR2643502 précédemment cités. Selon le document FR2643331, un dispositif à sensation d'efforts est formé d'organes élastiquement déformables, tels que des ressorts de compression, interposés entre la manette et le support suivant des axes respectifs de mobilité de la manette. Selon le document FR2643502, un dispositif à sensation d'efforts est formé de moteurs électriques en prise sur la manette et actionnés par des moyens de calcul exploitant les signaux électriques générés par la manette sous l'effet de son entraînement par le pilote.

Toujours en ce qui concerne les dispositifs à sensation d'efforts, on pourra aussi se reporter au document US4477043 (REPPERGER D.W.) qui propose d'articuler la manette en rotule sur un support et de ménager un dispositif à sensation d'efforts à son extrémité distale. Selon US4477043, le dispositif à sensation d'efforts est formé par des ressorts plus ou moins comprimés par un mécanisme motorisé du type à vis sans fin, l'activation dudit mécanisme étant placée sous la dépendance de moyens de calcul identifiant la position en basculement de la manette pour générer des commandes de vol.

Il est aussi connu par le document FR2962973 (AIRBUS OPERATIONS SAS) d'équiper une manette de commande de vol avec un dispositif à sensation d'efforts mettant en oeuvre des vérins s'opposant au basculement de la manette par l'intermédiaire de mécanismes à renvoi d'angle.

Il apparaît que les modalités de montage d'une manette de commande de vol générant des commandes de vol électriques équipant un giravion restent structurellement complexes et méritent d'être simplifiées.

Plus particulièrement, des inconvénients des mécanismes en général résident dans les risques de grippage des organes mobiles qu'ils comportent et dans les jeux de fonctionnement qui tendent à affecter la précision de la mobilité desdits organes mobiles. Par ailleurs, il est industriellement opportun de simplifier l'organisation structurelle d'un mécanisme afin d'en réduire au mieux les coûts d'obtention et de maintenance.

Il en ressort l'utilité de réduire au mieux le nombre d'organes composant un mécanisme en général et de simplifier son organisation structurelle, en recherchant des solutions industriellement et économiquement satisfaisantes permettant d'éviter les inconvénients précédemment énoncés. Une telle utilité est à rechercher en ce qui concerne un mécanisme de commande de vol d'un giravion mettant en œuvre une manette générant des commandes de vol électriques articulée sur un support en basculement multidirectionnel.

Cependant, une simplification structurelle d'un tel mécanisme de commande de vol ne doit pas porter atteinte à la fiabilité du fonctionnement de la manette. Une telle fiabilité de fonctionnement concerne notamment la précision recherchée de la mobilité de la manette dont les diverses positions potentielles sont détectées pour manœuvrer en pivotement les pales d'un rotor de giravion autour de leur axe de pas.

En outre, une simplification structurelle d'un tel mécanisme de commande de vol ne doit pas faire abstraction des diverses fonctionnalités utiles voire nécessaires à l'exploitation de la manette, notamment en ce qui concerne les aménagements procurant au pilote ladite sensation d'efforts. Il est de surcroît opportun de mettre à profit la démarche recherchée de simplification structurelle du montage de la manette pour simplifier aussi de tels aménagements.

Par ailleurs, la manette peut intégrer en elle-même divers et nombreux organes de commande annexes, tels que des boutons de commande par exemple. La simplification recherchée du mécanisme de commande de vol doit néanmoins autoriser l'implantation optionnelle des organes de commande annexes, voire et de préférence doit faciliter d'une part une telle implantation et d'autre part les opérations de maintenance et de montage des organes de commande annexes sur la manette.

Le but de la présente invention est de proposer un mécanisme de commandes selon la revendication 1.

Dans ce contexte, il est plus particulièrement visé par la présente invention de proposer un tel mécanisme de commandes de vol électriques d'un giravion prenant en compte les contraintes, les difficultés à surmonter et les avantages recherchés qui ont été précédemment énoncés.

Le mécanisme de commandes de vol électriques d'un giravion de la présente invention comprend :
-) une manette articulée sur un support en basculement multidirectionnel autour d'un centre de mobilité de la manette sur le support. La manette comprend une tige axialement étendue munie à son extrémité proximale de moyens de réception d'une poignée et à son extrémité opposée distale de moyens de montage en mobilité sur le support.
-) des moyens de détection de la position en basculement de la manette entraînée par l'homme, pilote du giravion notamment. Lesdits moyens de détection sont générateurs selon la position en basculement de la manette de signaux électriques exploités par des moyens de calcul générant des ordres de commande d'une mise en œuvre d'au moins un actionneur. Un tel actionneur provoque selon lesdits ordres de commande une manœuvre en pivotement desdites pales autour d'un axe de pas pour faire varier leur pas, notamment cycliquement voire collectivement.
-) des moyens à sensation d'efforts procurant, par génération d'efforts résistants antagonistes aux efforts d'entraînement en basculement de la manette par l'homme, un ressenti par l'homme desdits efforts résistants par l'intermédiaire de la manette.

Les notions « proximale » et « distale » sont comprises comme étant des notions relatives révélant la position d'un organe au plus proche ou inversement au plus distant d'un référentiel commun. Dans un contexte d'ergonomie et plus spécifiquement dans le cas de la manette, ledit référentiel commun est l'homme manœuvrant la manette par l'intermédiaire de la poignée. Par exemple en ce qui concerne la tige, l'extrémité proximale de la tige est donc comprise comme étant celle située axialement au plus proche de la poignée et l'extrémité distale de la tige est donc comprise comme étant celle située axialement au plus proche du support.

La notion de « axial » est d'évidence à considérer suivant la direction générale ou axe général d'extension de la tige réputée être un organe axialement étendu. La notion de « transversal » est une notion relative au regard de la notion de « axial », une direction transversale étant communément définie comme étant concourante avec une direction axiale. Par exemple dans le cas de la tige, une section transversale de la tige est orientée orthogonalement par rapport à sa section axiale.

Selon la présente invention, un tel mécanisme de commande de vol électrique est principalement reconnaissable en ce que la manette est montée mobile sur le support en basculement multidirectionnel par encastrement dans le support d'une zone d'ancrage de la tige ménagée à son extrémité distale. Un entraînement en basculement de la manette provoque un fléchissement global de la tige depuis sa zone d'ancrage vers son extrémité proximale.

Les moyens de montage en mobilité basculante de la manette sur le support sont structurellement limités audit encastrement de la tige dans le support. L'agencement des moyens de montage en mobilité de la tige sur le support sont au mieux simplifiés, sans porter atteinte à la précision procurée du basculement de la manette autour dudit centre de mobilité, ledit basculement étant obtenu par la faculté intrinsèque de la tige à se déformer en flexion depuis sa zone d'ancrage sous l'effet de l'entraînement par l'homme de la manette.

Par ailleurs, la résistance intrinsèque de la tige à se déformer en flexion est avantageusement utilisable pour former lesdits moyens à sensation d'efforts, au moins à partir de la simple liaison structurelle par encastrement de la tige au support.

En outre, les moyens de détection peuvent être limités à un ou plusieurs capteurs d'efforts mesurant les tensions auxquelles la tige est soumise sous l'effet de sa déformation en flexion.

Il en ressort globalement que l'organisation structurelle du mécanisme de la présente invention est simplifiée sans porter atteinte à l'efficacité et à la précision des commandes de vol émises à partir du basculement de la tige par rapport au centre de mobilité.

L'encastrement de la tige dans le support est préférentiellement réalisé en noyant l'extrémité distale de la tige dans une masse du support. D'autres solutions analogues procurant ledit encastrement peuvent être exploitées, tels que par l'exploitation de moyens de fixation ferme de l'extrémité distale de la tige sur le support procurant une solidarisation robuste entre eux. De tels moyens de fixation sont potentiellement du type par scellement ou du type mettant en œuvre des organes de fixation coopérant équipant respectivement l'extrémité distale de la tige et le support.

Tel que précédemment mentionné, les moyens à sensation d'efforts comprennent a résistance intrinsèque de la tige à se déformer en flexion, lesdits efforts résistants étant développés par la tige s'opposant à sa déformation en flexion sous l'effet de l'entraînement de la manette par l'homme.

Selon l'invention, a course en flexion de la tige est limitée par au moins un organe de butée ménagé à distance transversale autour de la tige. Ledit au moins un organe de butée définit autour de la tige depuis ladite zone d'ancrage une surface enveloppante évasée vers l'extrémité proximale de la tige, ladite surface enveloppante délimitant une course en flexion autorisée de la tige.

Le dit au moins un organe de butée est potentiellement limité à un point d'appui définissant avec la zone d'ancrage de la tige sur le support une génératrice définissant la surface enveloppante, notamment dans le cas où la surface enveloppante est une surface de révolution. Plusieurs organes de butée limités chacun à un point d'appui peuvent être alignés le long d'une dite génératrice qu'ils définissent conjointement avec la zone d'ancrage de la tige sur le support.

Ladite surface enveloppante est évidemment comprise comme étant définie entourant à distance la tige suivant son axe général d'extension. Par exemple, ladite surface enveloppante est une surface de révolution, de conformation conique plus particulièrement.

Il est cependant à considérer que la dite surface enveloppante peut être définie par une pluralité d'organes d'appui délimitant une section de la surface enveloppante de conformation quelconque. Une telle conformation quelconque de la section de la surface enveloppante est notamment déterminée selon la course en flexion autorisée de la tige en fonction de son orientation en basculement.

Il est aussi à considérer que la conformation de la section de la surface enveloppante est susceptible de varier suivant l'axe général d'extension de la tige, en étant délimitée par une pluralité de dites génératrices de conformation individuelle potentiellement diverses.

Dans ce contexte, les moyens à sensation d'efforts comprennent ledit au moins un organe de butée. Une prise d'appui transversale de la tige contre l'organe de butée provoque une inflexion localisée de la tige, modifiant l'intensité des efforts résistants qu'elle développe par modification de la position axiale de prise d'appui transversale de la tige vis-à-vis de la position de la zone d'ancrage de la tige.

La course en flexion de la tige est potentiellement limitée par une pluralité de dits organes de butée définissant individuellement des points d'inflexion respectifs d'au moins une génératrice définissant la conformation de la surface enveloppante au moins localement suivant l'orientation de l'axe général d'extension de la tige.

Plus particulièrement, les moyens à sensation d'efforts comprennent avantageusement une matérialisation de ladite surface enveloppante, la conformation de la section de la surface enveloppante étant potentiellement variable transversalement et/ou suivant l'axe général d'extension de la tige. Une variation de la section de la surface enveloppante permet de faire varier la sensation d'effort ressentie par le pilote en fonction de l'orientation en basculement de la manette.

Selon une forme de réalisation préférée en raison de sa simplicité structurelle, ledit au moins un organe de butée est ménagé par une paroi conformée selon ladite surface enveloppante. Ladite paroi est placée autour de la tige à distance transversale en formant une enceinte limitant la course en flexion de la tige.

L'organe de butée est potentiellement ménagé par l'ensemble de la paroi dont une dite génératrice définissant la surface enveloppante est exempte de point d'inflexion. L'organe de butée peut aussi être ménagé localement sur la paroi selon sa direction d'extension axiale en formant un dit point d'inflexion d'une dite quelconque génératrice définissant la surface enveloppante.

Selon l'invention, edit au moins un organe de butée est monté mobile sur le support par l'intermédiaire de moyens de réglage de la position relative entre l'organe de butée et la tige. Lesdits moyens de réglage constituent des moyens d'ajustement de l'intensité des efforts résistants développés par la tige, par déplacement et immobilisation de l'organe de butée à une position axiale souhaitée.

Par exemple, l'organe de butée est agencé en anneau entourant localement la tige selon sa direction d'extension axiale. Selon une forme de réalisation, ledit anneau est agencé en curseur déplaçable le long d'une rampe s'étendant à distance transversale le long de la tige, l'anneau étant immobilisable sur la rampe à une position axiale et/ou transversale désirée par des moyens de blocage.

Il est à considérer que le dit anneau peut être de forme circulaire ou oblongue, voire encore être d'une quelconque conformation déterminée selon une variation souhaitée de la course en flexion autorisée de la tige en fonction de son orientation en basculement, notamment pour faire varier la sensation d'effort ressentie par le pilote en fonction de l'orientation en basculement de la tige.

Selon une forme de réalisation, un dit organe de butée tel qu'agencé en anneau est potentiellement porté par d'un organe télescopique s'étendant à distance transversale le long de la tige et intégrant des moyens de blocage en extension, tel qu'un organe télescopique agencé en vérin électrique.

Tel que précédemment mentionné, les moyens de détection sont avantageusement formés par au moins un capteur d'efforts générant des tensions électriques résultant des déformations de la tige sous l'effet de son fléchissement. Ledit au moins un capteur d'efforts est implanté sur la tige et est générateur desdits signaux électriques selon l'intensité desdites tensions qu'il mesure.

Un tel capteur d'effort est par exemple constitué d'une jauge de contrainte potentiellement organisée en transducteur.

Un dit au moins un capteur d'efforts est par exemple implanté dans la zone d'ancrage de la tige.

Selon une forme simple de réalisation, la tige est de section transversale régulière, circulaire plus particulièrement. Ces dispositions sont telles que les efforts résistants développés par la tige sont analogues pour une surface enveloppante de révolution définie par une génératrice unique, quelle que soit la direction de basculement de la manette autour du centre de mobilité pour un effort donné d'entraînement en basculement de la manette.

Tel que précédemment mentionné, il est cependant envisageable de faire varier l'intensité des efforts résistants selon la direction de basculement de la manette provoquant une modification de l'attitude du giravion, tel que par exemple respectivement en tangage et en roulis voire encore en lacet ou en verticalité.

A cet effet, les moyens à sensation d'efforts mettent potentiellement en œuvre une conformation elliptique de la section transversale de la tige. Plus particulièrement, la section transversale de la tige varie potentiellement suivant deux directions transversales orientées orthogonalement l'une par rapport à l'autre. Ces dispositions sont telles que les efforts résistants développés par la tige varient en fonction de la direction de basculement de la manette.

Selon une autre forme de réalisation, les moyens à sensation d'efforts comprennent tel que précédemment mentionné ladite surface enveloppante contre laquelle la tige entraînée en basculement prend localement appui pour procurer une variation des efforts résistants développés par la tige en fonction de la direction de basculement de la manette.

Par exemple les moyens à sensation d'efforts comprennent au moins un dit organe de butée, tel que conformé en anneau. Un tel anneau peut être de conformation régulière circulaire ou peut être encore de conformation irrégulière en ménageant dans un même plan transversal divers points d'appui de la tige contre l'organe de butée, lesdits divers points d'appuis étant éloignés de la tige à des distances transversales respectives.

Selon une forme de réalisation, la manette est dotée d'au moins une masse élastiquement déformable d'amortissement de vibrations auxquelles la tige est potentiellement soumise. De telles vibrations sont notamment générées par le giravion en vol et ladite masse élastiquement déformable est agencée pour éviter des mouvements inopportuns de la manette sous l'effet de telles vibrations.

A cet effet, ladite masse élastiquement déformable est au moins en partie interposée entre le support et la tige, le support étant un organe par l'intermédiaire duquel lesdites vibrations sont potentiellement transmises à la tige.

Selon une forme préférée de réalisation, ladite au moins une masse élastiquement déformable est formée d'un revêtement issu d'un matériau élastomère épousant étroitement la surface extérieure de la tige en incluant notamment sa zone d'ancrage.

A titre d'exemple, les moyens de réception de la poignée sont agencés en manchon d'emboîtement de la poignée ménagé à l'extrémité proximale de la tige.

Le manchon et la poignée sont avantageusement chacun ouverts à leur extrémité distale pour ménager un ou plusieurs passages de câbles électriques en provenance de la poignée. De tels câbles sont notamment exploités pour le raccordement électrique de divers organes de commande annexes implantés sur la poignée, tels que divers boutons de commande actionnables par l'homme saisissant la poignée d'une main.

Le support est potentiellement agencé en boîtier d'encastrement dans l'accoudoir d'un siège, voire est potentiellement formé d'un corps intégré audit accoudoir.

Des exemples de réalisation de la présente invention vont être décrits en relation avec les figures de la planche annexée dans laquelle :
- la fig.1 est une illustration en perspective d'un exemple de réalisation d'un mécanisme comprenant une manette implantée sur un accoudoir.
- la fig.2 est une illustration du mécanisme représenté sur la fig.1, représentant plus particulièrement en coupe axiale la manette qu'il comprend.
- la fig.3 est une illustration en vue axiale partielle d'une manette d'un mécanisme selon une variante de réalisation de la présente invention.

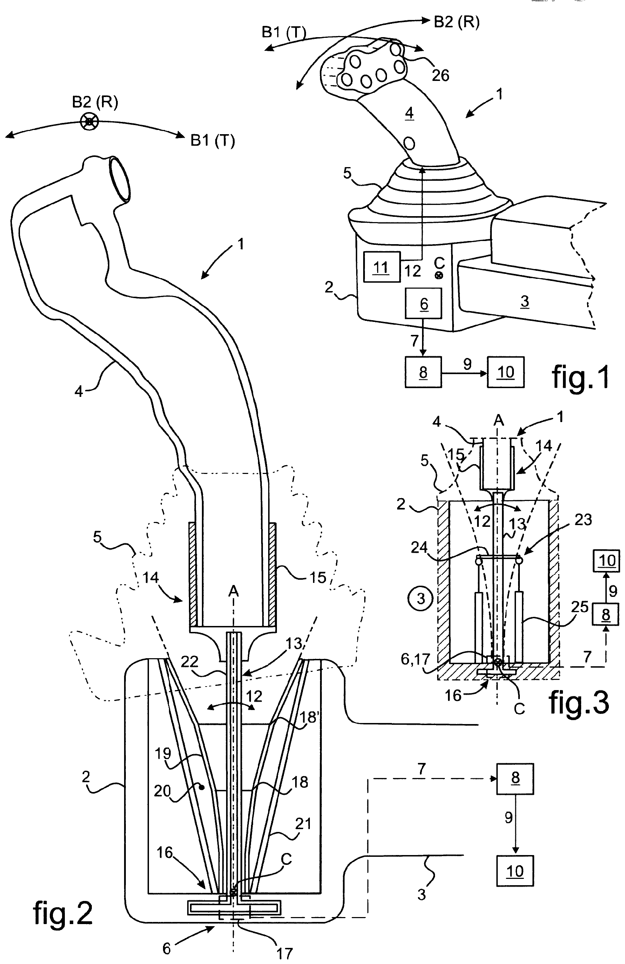

Sur les fig.1 à fig.3, un mécanisme de commande de vol électrique d'un giravion est organisé pour provoquer une variation du pas des pales d'au moins un rotor du giravion, notamment un rotor principal à axe sensiblement vertical du giravion voire encore un rotor annexe à axe sensiblement horizontal. Un tel mécanisme de commande comprend typiquement une manette 1 articulée en basculement multidirectionnel sur un support 2 autour d'un centre de mobilité C.

La manette 1 est avantageusement implantée sur l'accoudoir 3 d'un siège d'installation du pilote à bord du giravion. Le support 2 est potentiellement formé d'un corps de l'accoudoir 3 agencé en boîtier, ou encore est potentiellement formé d'un boîtier implanté dans un corps de l'accoudoir 3.

Le pilote installé dans le siège peut manœuvrer en basculement la manette 1 installée indifféremment à main gauche ou à main droite. La manette 1 comporte une poignée 4 émergeant hors de l'accoudoir 3 pour sa préhension par le pilote, la base de la poignée 4 étant typiquement enveloppée d'une paroi de protection 5 souple agencée en soufflet coiffant le support 2.

On remarquera que la poignée 4 est potentiellement équipée d'une multitude d'organes de commande annexes 26. De tels organes de commande annexes 26 permettent au pilote de générer diverses consignes de mise en œuvre de divers organes du giravion.

Selon l'exemple particulier de réalisation illustré, la manette 1 est un organe de commande entraîné par le pilote pour modifier l'attitude en vol du giravion en tangage et en roulis. Il est compris qu'une telle manette peut aussi être utilisée pour faire varier le pas collectif des pales d'un rotor principal du giravion afin de modifier l'attitude du giravion en verticalité ou encore pour faire varier le pas collectif des pales d'un rotor annexe du giravion afin de modifier l'attitude du giravion en lacet. Par rapport à la station du pilote manœuvrant la manette 1 au moyen de sa main :
-) un basculement d'avant en arrière et inversement de la manette 1 suivant une première direction de basculement B1 provoque une variation de l'attitude du giravion en tangage T, et
-) un basculement de droite à gauche et inversement de la manette 1 suivant une deuxième direction de basculement B2 provoque une variation de l'attitude du giravion en roulis R.

Il est évidemment compris que le montage en basculement multidirectionnel de la manette 1 sur le support 2 permet classiquement au pilote d'orienter la manette 1 suivant de quelconques directions de basculement par rapport au centre de mobilité C, en combinant potentiellement son intervention sur l'attitude du giravion à la fois en tangage T et en roulis R.

Le mécanisme comprend classiquement des moyens de détection 6 de la position en basculement de la manette 1. Les moyens de détection 6 génèrent des signaux électriques 7 selon la position en basculement de la manette 1. De tels signaux électriques 7 sont exploités par des moyens de calcul 8 générant des ordres de commande 9 sous la dépendance desquels est mis en œuvre au moins un actionneur 10 provoquant une manœuvre des pales en pivotement autour de leur axe de pas.

Le mécanisme comprend encore classiquement des moyens à sensation d'efforts 11 générant des efforts résistants 12 à l'encontre de l'entraînement de la manette 1 par le pilote. De tels efforts résistants 12 procurent au pilote, par l'intermédiaire de la manette 1, un ressenti représentatif des efforts développés pour manœuvrer les pales en pivotement autour de leur axe de pas.

Sur les fig.2 et fig.3 plus particulièrement, la manette 1 comprend une tige 13 étendue suivant un axe A général d'extension et porteuse à son extrémité proximale de la poignée 4. La tige 13 est de préférence issue d'un matériau métallique tel que l'acier.

L'extrémité distale de la tige 13 est munie de moyens de réception 14 par emmanchement de la poignée 4. De tels moyens de réception 14 sont formés par un manchon 15 de réception par emboîtement de l'extrémité distale de la poignée 4. L'extrémité distale de la poignée 4 est débouchant et le fond du manchon 15 est ouvert pour autoriser le passage à leur travers de câbles de raccordement électrique des organes de commande annexes 26.

La tige 13 est montée sur le support 2 en mobilité sur elle-même par fléchissement depuis son extrémité distale. A cet effet, la tige 13 est montée sur le support 2 par encastrement de son extrémité distale dans une masse du support 2. Une telle jonction par encastrement procure un fléchissement de la tige 13 sous l'effet de l'entraînement en basculement de la manette 1.

Sur les exemples de réalisation illustrés, l'encastrement de la tige 13 sur le support 2 est effectué par incorporation à une masse du support 2 de l'extrémité distale de la tige 13 formant une zone d'ancrage 16 de la tige 13 noyée dans la masse du support 2. Ladite zone d'ancrage 16 est par exemple essentiellement formée d'un épaulement axial ménagé à l'extrémité distale de la tige 13, un tel épaulement axial procurant une liaison robuste par encastrement entre la tige 13 et le support 2.

Quelle que soit la direction de basculement de la manette 1 par rapport au centre de mobilité C, la tige 13 est globalement soumise à déformation par flexion entre une station spontanée de repos illustrée sur les fig.2 et fig.3 et une station de fléchissement depuis sa zone d'ancrage 16 vers son extrémité proximale.

En outre, les moyens à sensation d'efforts exploitent la faculté intrinsèque de la tige 13 à se déformer en flexion. Lorsque le pilote entraîne en basculement la manette 1, la tige 13 déformée en flexion développe lesdits efforts résistants 12 s'opposant aux efforts d'entraînement de la manette 1 par le pilote. Les efforts résistants 12 développés par la tige 13 procurent au pilote un ressenti de l'amplitude du mouvement en basculement qu'il imprime à la manette.

Par ailleurs, la déformation en flexion de la tige 13 est exploitée pour générer les signaux électriques 7 transmis par les moyens de calcul 8. Un ou plusieurs capteurs d'efforts 17 sont implantés sur la tige 13 pour mesurer les contraintes internes auxquelles elle est soumise sous l'effet de son fléchissement et générer lesdits signaux électriques 7 en fonction des mesures de contraintes effectuées. Sur l'exemple de réalisation illustré, un tel capteur d'efforts 17 est implanté dans la zone d'ancrage 16 de la tige 13 sur le support 2. Selon l'intensité des contraintes qu'ils mesurent, le ou les capteurs d'efforts 17 génèrent les signaux électriques 7 représentatifs de la déformation en flexion de la tige 13 et donc représentatifs de l'amplitude et de la direction de basculement de la manette 1 entraînée par le pilote.

La course en flexion de la tige 13 est limitée par au moins un organe de butée 18,18',23 ménagé à distance transversale autour de la tige 13. Le ou les organes de butée 18,18',23 définissent conjointement avec la zone d'ancrage 16 une surface enveloppante S ménagée autour et à distance de la tige 13. Sur l'exemple de réalisation illustrée, ladite surface enveloppante S est une surface de révolution évasée vers l'extrémité proximale de la tige 13, la surface enveloppante S délimitant un espace autorisé de mobilité de la tige 13 sur elle-même en fléchissement.

En outre, le ou les organes de butée 18,18',23 permettent de faire varier l'intensité des efforts résistants 12 développés par la tige 13 à des seuils prédéfinis respectifs de déformation de la tige 13 en flexion. Plus particulièrement, le ou les organes de butée 18,18',23 ménagent chacun un point d'appui périphérique de la tige 13 modifiant localement l'inflexion d'une génératrice définissant la conformation de la surface enveloppante S au moins localement suivant l'orientation de l'axe A général d'extension de la tige 13.

Sur l'exemple de réalisation illustré selon lequel la surface enveloppante est une surface de révolution S, ladite génératrice est unique et est de conformation identique pour l'ensemble de la surface enveloppante S, en définissant notamment un cône évasé vers l'extrémité proximale de la tige 13.

Il en ressort que dans le cas où la tige 13 prend appui contre un organe de butée 18,18',23, sa déformation en flexion est infléchie localement suivant son axe A d'extension en fonction de son orientation en basculement en en fonction des efforts d'entraînement de la manette 1 par le pilote.

Sur la fig.2, la course en flexion de la tige 13 est limitée par une paroi 19 conformée selon ladite surface enveloppante S, une telle conformation conférant à la paroi 19 une conformation générale en entonnoir.

Il est à considérer qu'un tel entonnoir est d'une section de conformation potentiellement quelconque selon la limitation de la course en flexion de la tige 13 souhaitée localement en fonction de son orientation en basculement. La section d'un tel entonnoir est susceptible de varier en conformation tant transversalement que suivant l'orientation de l'axe A général d'extension de la tige 13. Sur l'exemple de réalisation illustré selon lequel la surface enveloppante S est d'une section de conformation conique, un tel entonnoir comporte une section circulaire dont le diamètre varie suivant l'orientation de l'axe A général d'extension de la tige 13.

La paroi 19 comporte des inflexions localisées selon l'axe A d'extension de la tige 13, lesdites inflexions ménageant des organes de butée 18,18' respectifs.

La paroi 19 est disposée autour de la tige 13 en formant une enceinte de confinement de la tige 13 à l'intérieur de l'espace délimité par la surface enveloppante S. La paroi 19 est par exemple placée et fixée à l'intérieur d'un logement 20 du support 2 ménagé par une cloison 21. La fixation de la paroi 19 est par exemple réalisée par emboîtement de la paroi 19 à l'intérieur du logement 20 et/ou par scellement de la paroi 19 sur le support 2.

Par ailleurs, la tige 13 est enrobée d'un revêtement issu d'une masse élastiquement déformable 22 placée en interposition entre le support 2 et la tige 13. Une telle masse élastiquement déformable 22 est par exemple issue d'un matériau élastomère apte à absorber les vibrations auxquelles est potentiellement soumise la manette 1. Le revêtement est notamment ménagé par surmoulage autour de la tige 13 procurant un scellement du revêtement par vulcanisation sur la tige 13. On relèvera en outre qu'un tel revêtement procure une protection de la tige 13 vis-à-vis de son environnement extérieur.

Sur la fig.3, un dit organe de butée 23 est formé d'un anneau 24 entourant à distance la tige 13 localement suivant son axe A d'extension. L'anneau 24 est équipé de moyens de réglage 25 de sa position suivant l'extension axiale de la tige 13, pour ajuster sa position axiale et donc l'intensité des efforts résistants 12 développés par la tige 13 déformée en flexion. Sur l'exemple de réalisation illustré, l'anneau 24 est porté par des moyens de réglage 25 motorisés, tel qu'un ou plusieurs vérins électriques, dont la mise en œuvre permet d'ajuster la position axiale de l'anneau 24 le long de la tige 13.

## Revendications

1. Mécanisme de commande de vol électrique d'un giravion pouvant provoquer une variation du pas des pales d'au moins un rotor du giravion, le mécanisme comprenant :
-) une manette (1) articulée sur un support (2) en basculement multidirectionnel (B1,B2) autour d'un centre de mobilité (C) de la manette (1) sur le support (2), la manette (1) comprenant une tige (13) axialement étendue munie à son extrémité proximale de moyens de réception (14) d'une poignée (4) et à son extrémité opposée distale de moyens de montage en mobilité sur le support (2), ladite manette (1) étant montée mobile sur le support (2) en basculement multidirectionnel par encastrement dans le support (2) d'une zone d'ancrage (16) de la tige (13) ménagée à son extrémité distale, un entraînement en basculement de la manette (1) provoquant un fléchissement global de la tige (13) depuis sa zone d'ancrage (16) vers son extrémité proximale,
-) des moyens de détection (6) de la position en basculement de la manette (1), lesdits moyens de détection (6) générant selon la position en basculement de la manette (1) des signaux électriques (7) exploités par des moyens de calcul (8) générant des ordres de commande (9) d'une mise en œuvre d'au moins un actionneur (10) pouvant provoquer une manœuvre en pivotement desdites pales autour d'un axe de pas pour faire varier leur pas,
-) au moins un organe de butée (18,18',23) pour limiter la course en flexion de la tige (13), ledit au moins un organe de butée (18,18',23) étant ménagé à distance transversale autour de la tige (13), ledit au moins un organe de butée (18,18',23) définissant autour de la tige (13) depuis ladite zone d'ancrage (16) une surface enveloppante (S) évasée vers l'extrémité proximale de la tige (13), ladite surface enveloppante (S) délimitant une course en flexion autorisée de la tige (13),
ledit mécanisme comprenant des moyens à sensation d'efforts (11) procurant, par génération d'efforts résistants (12) antagonistes aux efforts d'entraînement en basculement de la manette (1) par l'homme, un ressenti par l'homme desdits efforts résistants (12) par l'intermédiaire de la manette (1), les moyens à sensation d'efforts (11) comprenant la résistance intrinsèque de la tige (13) à se déformer en flexion, lesdits efforts résistants (12) étant développés par la tige (13) s'opposant à sa déformation en flexion, et ledit au moins un organe de butée (18,18',23) étant monté mobile sur le support (2) par l'intermédiaire de moyens de réglage (25) de la position relative entre l'organe de butée (18,18',23) et la tige (13), lesdits moyens de réglage (25) constituant des moyens d'ajustement de l'intensité des efforts résistants (12) développés par la tige (13).

2. Mécanisme selon la revendication 1,
**caractérisé en ce que** les moyens à sensation d'efforts (11) comprennent ledit au moins un organe de butée (18,18',23), une prise d'appui transversale de la tige (13) contre l'organe de butée (18,18',23) provoquant une inflexion localisée de la tige (13) modifiant l'intensité des efforts résistants (12) qu'elle développe.

3. Mécanisme selon l'une quelconque des revendications 1 et 2,
**caractérisé en ce que** la course en flexion de la tige (13) est limitée par une pluralité de dits organes de butée (18,18',23) définissant individuellement des points d'inflexion respectifs d'une génératrice définissant ladite surface enveloppante (S).

4. Mécanisme selon l'une quelconque des revendications 1 à 3,
**caractérisé en ce que** ledit au moins un organe de butée (18,18',23) est ménagé par une paroi (19) conformée selon ladite surface enveloppante (S) et placée autour de la tige (13) à distance transversale en formant une enceinte limitant la course en flexion de la tige (13).

5. Mécanisme selon l'une quelconque des revendications 1 à 4,
**caractérisé en ce que** les moyens de détection (6) sont formés par au moins un capteur d'efforts (17) générant des tensions électriques résultant des déformations de la tige sous l'effet de son fléchissement, ledit au moins un capteur d'efforts (17) étant implanté sur la tige (13) et générant lesdits signaux électriques (7) selon l'intensité desdites tensions qu'il mesure.

6. Mécanisme selon la revendication 5,
**caractérisé en ce que** ledit au moins un capteur d'efforts (17) est implanté dans la zone d'ancrage (16) de la tige (13).

7. Mécanisme selon l'une quelconque des revendications 1 à 6,
**caractérisé en ce que** la tige (13) est de section transversale circulaire.

8. Mécanisme selon l'une quelconque des revendications 1 à 7,
**caractérisé en ce que** les moyens à sensation d'efforts (11) mettent en œuvre une conformation elliptique de la section transversale de la tige (13) de sorte que les efforts résistants (12) développés par la tige (13) varient en fonction de la direction de basculement de la manette (1).

9. Mécanisme selon l'une quelconque des revendications 1 à 8,
**caractérisé en ce que** la manette (1) est dotée d'au moins une masse élastiquement déformable (22) d'amortissement de vibrations auxquelles la tige (13) est soumise.

10. Mécanisme selon la revendication 9,
**caractérisé en ce que** ladite au moins une masse élastiquement déformable (22) est formée d'un revêtement issu d'un matériau élastomère épousant étroitement la surface extérieure de la tige (13).

11. Mécanisme selon l'une quelconque des revendications 1 à 10,
**caractérisé en ce que** les moyens de réception (14) de la poignée (4) sont agencés en manchon (15) d'emboîtement de la poignée (4) ménagé à l'extrémité proximale de la tige (13).

12. Mécanisme selon l'une quelconque des revendications 1 à 11,
**caractérisé en ce que** le support (2) est formé d'un corps intégré dans l'accoudoir (3) d'un siège.

## Patentansprüche

1. Elektrischer Flugsteuermechanismus für ein Drehflügelflugzeug, der in der Lage ist, eine Veränderung des Anstellwinkels der Blätter mindestens eines Rotors des Drehflügelflugzeugs zu bewirken, wobei der Mechanismus umfasst:
-) einen Steuerknüppel (1), der an einem Träger (2) so angelenkt ist, dass er in mehrere Richtungen (B1, B2) um ein Beweglichkeitszentrum (C) des Steuerknüppels (1) auf dem Träger (2) schwenkbar ist, wobei der Steuerknüppel (1) eine axial ausgedehnte Stange (13) umfasst, die an ihrem proximalen Ende mit Mitteln (14) zur Aufnahme eines Handgriffs (4) und an ihrem entgegengesetzten distalen Ende mit Mitteln zur beweglichen Montage auf dem Träger (2) versehen ist, wobei der Steuerknüppel (1) auf dem Träger (2) in mehrere Richtungen schwenkbar montiert ist, indem in den Träger (2) eine Verankerungszone (16) der Stange (13) eingebettet ist, die an deren distalem Ende vorgesehen ist, wobei ein Schwenkantrieb des Steuerknüppels (1) eine Gesamtbiegung der Stange (13) von deren Verankerungszone (16) zu deren proximalem Ende hin bewirkt,
-) Mittel (6) zum Erfassen der Schwenkstellung des Steuerknüppels (1), wobei die Mittel zum Erfassen (6) in Abhängigkeit von der Schwenkstellung des Steuerknüppels (1) elektrische Signale (7) erzeugen, die von Rechenmitteln (8) verwendet werden, die Steuerbefehle (9) für den Betrieb mindestens eines Stellglieds (10) erzeugen, das in der Lage ist, eine Schwenkbewegung der Blätter um eine Anstellachse zu bewirken, um ihre Anstellung zu verändern,
-) mindestens ein Anschlagelement (18, 18', 23) zur Begrenzung des Biegewegs der Stange (13), wobei das mindestens eine Anschlagelement (18, 18', 23) in einem Querabstand um die Stange (13) herum angeordnet ist, wobei das mindestens eine Anschlagelement (18, 18', 23) um die Stange (13) herum von der Verankerungszone (16) aus eine Hüllfläche (S) definiert, die sich zum proximalen Ende der Stange (13) hin erweitert, wobei die Hüllfläche (S) einen zulässigen Biegeweg der Stange (13) begrenzt,
wobei der Mechanismus Kraftsensormittel (11) umfasst, die durch Erzeugung von Widerstandskräften (12), die vom Menschen zum Kippens des Hebels (1) ausgeübten Kräften entgegengesetzt sind, ein Fühlen der Widerstandskräfte (12) durch den Menschen mittels des Steuerknüppels (1) ermöglichen, wobei die Kraftsensormittel (11) den Eigenwiderstand der Stange (13) gegen Biegeverformung umfassen, wobei die Widerstandskräfte (12) durch die Stange (13) erzeugt werden, die sich ihrer Biegeverformung widersetzt, und wobei das mindestens eine Anschlagelement (18, 18', 23) mit Hilfe von Mitteln (25) zum Einstellen der relativen Position zwischen dem Anschlagelement (18, 18', 23) und der Stange (13) beweglich auf dem Träger (2) angebracht ist, wobei die Mittel (25) zum Einstellen Mittel zum Einstellen der Intensität der durch die Stange (13) erzeugten Widerstandskräfte (12) bilden.

2. Mechanismus nach Anspruch 1,
**dadurch gekennzeichnet, dass** die Kraftsensormittel (11) das mindestens eine Anschlagelement (18, 18', 23) umfassen, und dass eine Querabstützung der Stange (13) an dem Anschlagelement (18, 18', 23) eine örtliche Biegung der Stange (13) bewirkt, die die Intensität der Widerstandskräfte (12), die sie entwickelt, verändert.

3. Mechanismus nach einem der Ansprüche 1 und 2,
**dadurch gekennzeichnet, dass** der Biegeweg der Stange (13) durch eine Mehrzahl der Anschlagelemente (18, 18', 23) begrenzt ist, die einzeln jeweilige Biegepunkte einer die Hüllfläche (S) definierenden Erzeugenden definieren.

4. Mechanismus nach einem der Ansprüche 1 bis 3,
**dadurch gekennzeichnet, dass** das mindestens eine Anschlagelement (18, 18', 23) von einer Wand (19) gebildet ist, die entsprechend der Hüllfläche (S) geformt und um die Stange (13) herum in einem Querabstand angeordnet ist, und dadurch eine den Biegeweg der Stange (13) begrenzende Einfassung bildet.

5. Mechanismus nach einem der Ansprüche 1 bis 4,
**dadurch gekennzeichnet, dass** die Mittel zum Erfassen (6) durch mindestens einen Kraftsensor (17) gebildet sind, der elektrische Spannungen erzeugt, die aus den Verformungen der Stange unter der Wirkung ihrer Biegung resultieren, wobei der mindestens eine Kraftsensor (17) an der Stange (13) implantiert ist und die elektrischen Signale (7) in Abhängigkeit von der Intensität der Spannungen erzeugt, die er misst.

6. Mechanismus nach Anspruch 5,
**dadurch gekennzeichnet, dass** der mindestens eine Kraftsensor (17) im Verankerungsbereich (16) der Stange (13) implantiert ist.

7. Mechanismus nach einem der Ansprüche 1 bis 6,
**dadurch gekennzeichnet, dass** die Stange (13) im Querschnitt kreisförmig ist.

8. Mechanismus nach einem der Ansprüche 1 bis 7,
**dadurch gekennzeichnet, dass** die Kraftsensormittel (11) eine elliptische Form des Querschnitts der Stange (13) nutzen, so dass die von der Stange (13) entwickelten Widerstandskräfte (12) in Abhängigkeit von der Schwenkrichtung des Griffs (1) variieren.

9. Mechanismus nach einem der Ansprüche 1 bis 8,
**dadurch gekennzeichnet, dass** der Steuerknüppel (1) mit mindestens einer elastisch verformbaren Masse (22) zur Dämpfung von Schwingungen, denen die Stange (13) ausgesetzt ist, versehen ist.

10. Mechanismus nach Anspruch 9,
**dadurch gekennzeichnet, dass** die mindestens eine elastisch verformbare Masse (22) durch eine Beschichtung gebildet ist, die aus einem elastomeren Material hervorgeht, das sich eng an die Außenfläche der Stange (13) anschmiegt.

11. Mechanismus nach einem der Ansprüche 1 bis 10,
**dadurch gekennzeichnet, dass** die Mittel (14) zur Aufnahme des Handgriffs (4) als eine am proximalen Ende des Stiels (13) vorgesehene Hülse (15) zur Anbringung des Handgriffs (4) ausgebildet sind.

12. Mechanismus nach einem der Ansprüche 1 bis 11,
**dadurch gekennzeichnet, dass** der Träger (2) durch einen Körper gebildet ist, der in die Armlehne (3) eines Sitzes integriert ist.

## Claims

1. Electric flight control mechanism of a rotorcraft capable of causing a variation in the pitch of the blades of at least one rotor of the rotorcraft, the mechanism comprising:
-) a joystick (1) articulated on a support (2) with multidirectional tilting (B1, B2) about a centre of mobility (G) of the joystick (1) on the support (2), the joystick (1) comprising an axially extended rod (13) provided at its proximal end with means (14) for accommodating a hand grip (4) and provided at its opposite distal end with means for movable mounting on the support (2), said joystick (1) being movably mounted on the support (2) with multidirectional tilting by anchoring the rod (13) provided at its distal end in an anchoring zone (16) in the support (2), with a tilting drive motion of the joystick (1) causing overall deflection of the rod (13) from its anchoring zone (16) to its proximal end;
-) means (6) for detecting the tilting position of the joystick (1), said detection means (6) generating, depending on the tilting position of the joystick (1), electrical signals (7) used by computation means (8) generating control orders (9) for implementing at least one actuator (10) capable of causing a pivoting manoeuvre of said blades about a pitch axis in order to vary their pitch;
-) at least one stop component (18, 18', 23) for limiting the bending stroke of the rod (13), said at least one stop component (18, 18', 23) being provided at a transverse distance about the rod (13), said at least one stop component (18, 18', 23) defining about the rod (13), from said anchoring zone (16), a wrap-around surface (S) that is flared towards the proximal end of the rod (13), said wrap-around surface (S) delimiting an authorized bending stroke of the rod (13),
said mechanism comprising force-sensing means (11) providing, by generating resistant forces (12) that counteract the tilting drive forces of the joystick (1) by the person, the person with a feeling of said resistant forces (12) by means of the joystick (1), the force-sensing means (11) comprising the intrinsic resistance of the rod (13) to deform by bending, said resistant forces (12) being developed by the rod (13) opposing its bending deformation, and said at least one stop component (18, 18', 23) being movably mounted on the support (2) using means (25) for adjusting the relative position between the stop component (18, 18', 23) and the rod (13), said adjustment means (25) forming means for adjusting the intensity of the resistant forces (12) developed by the rod (13).

2. Mechanism according to claim 1, **characterized in that** the force-sensing means (11) comprise said at least one stop component (18, 18', 23), a hold for transversely bearing the rod (13) against the stop component (18, 18', 23), causing localized inflection of the rod (13) modifying the intensity of the resistant forces (12) that it develops.

3. Mechanism according to any one of claims 1 and 2, **characterized in that** the bending stroke of the rod (13) is limited by a plurality of said stop components (18, 18', 23) individually defining points of respective inflection of a generating line defining said wrap-around surface (S).

4. Mechanism according to any one of claims 1 to 3, **characterized in that** said at least one stop component (18, 18', 23) is formed by a wall (19) shaped according to said wrap-around surface (S) and placed around the rod (13) at a transverse distance, forming an enclosure limiting the bending stroke of the rod (13).

5. Mechanism according to any one of claims 1 to 4, **characterized in that** the detection means (6) are formed by at least one force sensor (17) generating electrical voltages resulting from the deformations of the rod under the effect of its deflection, said at least one force sensor (17) being installed on the rod (13) and generating said electrical signals (7) according to the intensity of said voltages that it measures.

6. Mechanism according to claim 5, **characterized in that** said at least one force sensor (17) is installed in the anchoring zone (16) for the rod (13).

7. Mechanism according to any one of claims 1 to 6, **characterized in that** the rod (13) has a circular cross-section.

8. Mechanism according to any one of claims 1 to 7, **characterized in that** the force-sensing means (11) implement elliptical conformation of the cross-section of the rod (13) so that the resistant forces (12) developed by the rod (13) vary depending on the tilting direction of the joystick (1).

9. Mechanism according to any one of claims 1 to 8, **characterized in that** the joystick (1) is provided with at least one elastically deformable mass (22) for damping the vibrations experienced by the rod (13).

10. Mechanism according to claim 9, **characterized in that** said at least one elastically deformable mass (22) is formed from a coating resulting from an elastomer material closely matching the outer surface of the rod (13).

11. Mechanism according to any one of claims 1 to 10, **characterized in that** the means (14) for accommodating the hand grip (4) are arranged in a sleeve (15) for fitting the hand grip (4), which sleeve is provided at the proximal end of the rod (13).

12. Mechanism according to any one of claims 1 to 11, **characterized in that** the support (2) is formed by a body integrated into the armrest (3) of a seat.
